# EUROPEAN PATENT APPLICATION

(11) **EP 3 648 397 A1**
(43) Date of publication of application: **06.05.2020**
(21) Application number: 19206114.1
(22) Date of filing: 30.10.2019
(51) Int. Cl.: H04L 9/32, H04W 12/06

(54) **PORTABLE DEVICE AND VERIFICATION SYSTEM**

(30) Priority: 05.11.2018 JP 2018208149
(71) Applicant: Kabushiki Kaisha Tokai Rika Denki Seisakusho, Niwa-gun, Aichi 480-0195 (JP)
(72) Inventor: KAWAMURA, Tetsuya, Niwa-gun,, Aichi 480-0195 (JP); KOJIMA, Hiroaki, Niwa-gun,, Aichi 480-0195 (JP); KAWAMURA, Masayuki, Niwa-gun,, Aichi 480-0195 (JP); MATSUOKA, Atsushi, Niwa-gun,, Aichi 480-0195 (JP)
(74) Representative: TBK

(57) **Abstract**

A portable device (3) that performs bidirectional communication with a communication peer (2) includes a communication controlling means (31) for performing main verification communication (S5-S7) and pre-verification communication (S1-S4) prior to the main verification communication (S5-S7). In the main verification communication (S5-S7), the communication controlling means (31) receives a main verification communication signal (S5) from the communication peer (2) and returns a main verification response signal (S6). The communication controlling means (31) performs the pre-verification communication (S1-S4) using a communication format that is the same as that of the main verification communication (S5-S7). In the pre-verification communication (S1-S4), the communication controlling means (31) receives a pre-verification communication signal (S1) and returns a pre-verification response signal (S3) incorporating a random value in a response code.

## Description

The present disclosure relates to a portable device and a verification system.

A widely-used electronic key system performs electronic key verification through wireless communication performed between a security device, which is installed in a vehicle or a house, and an electronic key (portable device), which is carried by a user, to actuate a control subject when the electronic key is verified. Japanese Laid-Open Patent Publication Nos. 2012-123527 and 2010-180596 disclose such an electronic key system that performs challenge response authentication once to verify the electronic key.

In a typical challenge response authentication, a communication master transmits a challenge signal including a challenge code and generates a response code from the challenge code using an encryption code stored in the communication master. When the portable device receives the challenge signal from the communication master, the portable device obtains the challenge code from the challenge signal. The portable device uses an encryption code stored in the portable device to generate a response code from the obtained challenge code and returns a response signal including the response code to the communication master. When the communication master receives the response signal, the communication master obtains the response code from the response signal. The communication master compares the response code that it generated with the response code generated by the portable device. When the two response codes match, the communication master determines that the challenge response authentication has been accomplished. This allows a user who is carrying the authorized portable device to, for example, start the engine of a vehicle or unlock the door of a house.

When another verification process is performed in addition to the challenge response authentication, communication commands and communication codes may be added using a new communication format. This lengthens the communication time and lowers the processing performance.

Accordingly, there is a need for a portable device and a verification system that improves the processing performance without affecting the communication time.

In one embodiment, a portable device configured to perform bidirectional communication with a communication peer includes a communication controlling means for performing main verification communication and pre-verification communication prior to the main verification communication. In the main verification communication, the communication controlling means is configured to receive a main verification communication signal from the communication peer and return a main verification response signal. The communication controlling means is configured to perform the pre-verification communication using a communication format that is the same as that of the main verification communication. In the pre-verification communication, the communication controlling means is configured to receive a pre-verification communication signal and return a pre-verification response signal incorporating a random value in a response code.

In one embodiment, a verification system includes a portable device and a communication peer configured to communicate with the portable device. The verification system is configured to perform verification through bidirectional communication between the portable device and the communication peer. The portable device includes a communication controlling means for performing main verification communication and pre-verification communication prior to the main verification communication. In the main verification communication, the communication controlling means is configured to receive a main verification communication signal from the communication peer and return a main verification response signal. The communication controlling means is configured to perform the pre-verification communication using a communication format that is the same as that of the main verification communication. In the pre-verification communication, the communication controlling means is configured to receive a pre-verification communication signal and return a pre-verification response signal incorporating a random value in a response code. The communication peer includes a verifying means for determining whether the random value included in the pre-verification response signal is valid as the random value for the pre-verification communication.

According to the portable device and the verification system, the pre-verification communication is performed by using the same communication format as the main verification communication. This improves the processing performance without affecting the communication time.
Fig. 1 is a schematic block diagram illustrating the configuration of an electronic key system that is an example of a verification system according to one embodiment.
Fig. 2 is a schematic diagram illustrating a communication format for bidirectional communication.
Fig. 3 is a schematic flowchart illustrating the operational flow of bidirectional communication including encrypted random value verification.

One embodiment of a portable device and a verification system will now be described.

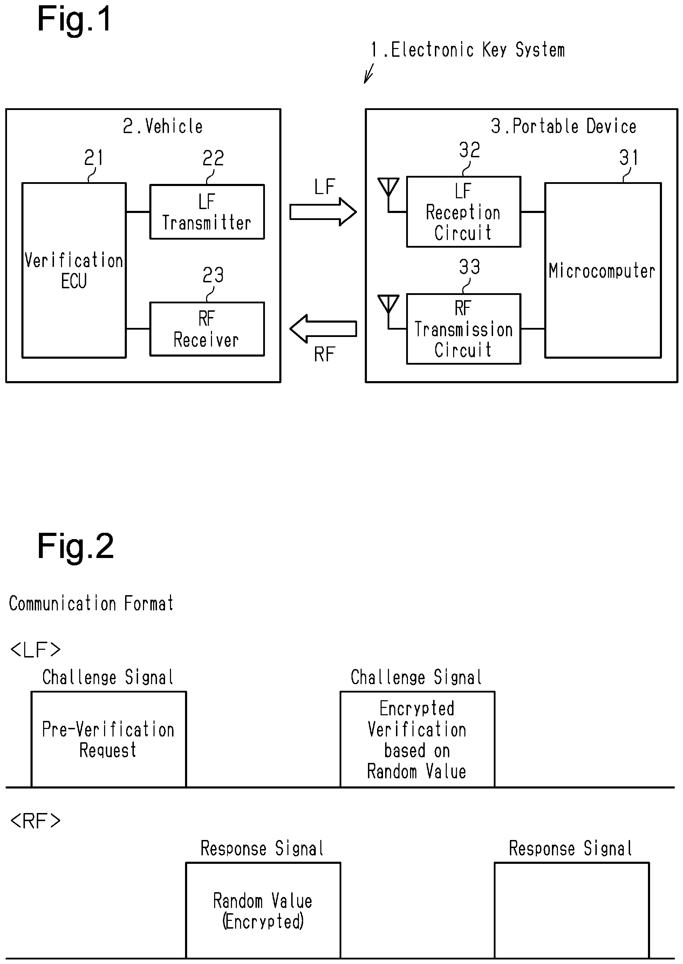

As illustrated in Fig. 1, an electronic key system 1 that is one example of the verification system performs verification through bidirectional communication between a vehicle 2 and a portable device 3. In the present example, the portable device 3 is an electronic key (vehicle key), and the vehicle 2 is one example of a communication peer of the portable device 3. The electronic key is verified through bidirectional communication. When the electronic key is verified, the vehicle 2 actuates a control subject such as a door or an engine. For example, the vehicle 2 permits or executes the locking or unlocking of the door or the starting of the engine when the electronic key is verified.

The vehicle 2 includes a verification electronic control unit (ECU) 21, which controls the security of the vehicle 2, a low frequency (LF) transmitter 22, and a radio frequency (RF) receiver 23. In one example, the LF transmitter 22 transmits radio waves on the low frequency (LF) band as an LF signal. The RF receiver 23 receives radio waves on the ultrahigh frequency (UHF) band as an RF signal.

The portable device 3 includes a microcomputer 31 with one or more processors, an LF reception circuit 32 that receives the LF signal, and an RF transmission circuit 33 that transmits the RF signal.

In one example, the verification ECU 21 serves as a communication master and transmits a wake signal (LF signal) from the LF transmitter 22 to initiate bidirectional communication and form a communication area around the vehicle 2. When the portable device 3 enters the communication area, the microcomputer 31, which is activated by the wake signal, returns an acknowledgement signal (RF signal) to the vehicle 2. When the RF receiver 23 receives the acknowledgement (ACK) signal, bidirectional communication is established between the vehicle 2 and the portable device 3. Then, the verification ECU 21 transmits an LF signal in the next phase from the LF transmitter 22 in accordance with a communication format. The portable device 3 receives the LF signal and returns an RF signal in the next phase to the vehicle 2. In this example, the LF signal is one example of a communication signal, and the RF signal is one example of a response signal.

In the present embodiment, the bidirectional communication of the series of communication signals and response signals transmitted and received between the vehicle 2 and the portable device 3 includes main verification communication and pre-verification communication. In one example, challenge response authentication, which is encrypted verification, is performed as the main verification communication. The pre-verification communication is performed prior to the main verification communication using the same communication format as the main verification communication. In one example, encrypted random value verification is performed as the pre-verification communication.

In the main verification communication, the vehicle 2 transmits a challenge signal (communication signal) including a challenge code in accordance with a main verification communication format. When the challenge signal is transmitted in accordance with the communication format, the verification ECU 21 uses an encryption code stored in the vehicle 2 (e.g., verification ECU 21) to generate (calculate) a response code from the challenge code. When the portable device 3 receives the challenge code, the microcomputer 31 obtains the challenge code from the received challenge signal and uses an encryption code stored in the portable device 3 (e.g., microcomputer 31) to generate (calculate) a response code from the challenge code. Then, the portable device 3 returns a response signal including the response code to the vehicle 2. When the vehicle 2 receives the response signal, the verification ECU 21 compares the response code generated by the microcomputer 31 with the response code generated by the verification ECU 21 and determines that the challenge response authentication has been accomplished when the two response codes match.

In the pre-verification communication, the vehicle 2 transmits a challenge signal (communication signal) as a pre-verification request in accordance with the main verification communication format. In one example, the challenge signal for the pre-verification request may be formed by changing a head bit or adding an affixed bit to the challenge signal used for main verification communication. In another example, the challenge signal for the pre-verification request may be formed by changing a command included in the challenge signal used for main verification communication.

The challenge signal used for the pre-verification communication may include, for example, a challenge code and a command instructing the generation of a random value. In this case, the microcomputer 31 generates the random value in response to the command of the challenge signal received during the pre-verification communication. Then, the microcomputer 31 uses an encryption code stored in the portable device 3 (e.g., microcomputer 31) to generate (calculate) a response code from the challenge code and the random value. The microcomputer 31 returns a response signal including the response code. Accordingly, in the pre-verification communication, the response code is generated incorporating the random value. In one example, the random value is encrypted and returned as the response signal from the portable device 3 to the vehicle 2. When the vehicle 2 receives the response signal, the verification ECU 21 performs encrypted random value verification to determine whether the random value included in the response signal is valid as the random value for the pre-verification communication. The verification ECU 21, for example, decrypts the response code (including encrypted random value) to obtain the random value and determines whether the random value is valid. When determining that the random value is valid, the verification ECU 21 shifts to main verification communication and transmits a main verification communication challenge signal.

The operation of the electronic key system 1 will now be described.

Fig. 2 is a schematic diagram illustrating the bidirectional communication format, which may be used for main verification communication (in present example, challenge response authentication). A wake signal (not illustrated) from the vehicle 2 initiates bidirectional communication. When the portable device 3 receives the wake signal and returns an acknowledgement signal (not illustrated) to the vehicle 2, bidirectional communication is established between the vehicle 2 and the portable device 3.

Pre-verification communication is first initiated, and the vehicle 2 transmits a challenge signal (LF signal serving as pre-verification request). The portable device 3 receives the challenge signal and returns a response signal (RF signal including encrypted random value).

Under the condition that the encrypted random value has been verified, the vehicle 2 transmits a challenge signal (LF signal) for main verification communication. The portable device 3 receives the challenge signal and returns a response signal (RF signal). In the present example, when encrypted verification is performed during the main verification communication, the vehicle 2 transmits a challenge signal that is based on the random value decoded from the response signal received during the pre-verification communication. For example, the vehicle 2 may transmit a challenge signal including a challenge code to which the random value is added.

In the pre-verification communication, challenge response authentication is performed as encrypted random value verification in accordance with the same communication format as the main verification communication. In other words, the main verification communication serves as a retry of the pre-verification communication. When the encrypted random value verification during the pre-verification communication and the encrypted verification during the main verification communication are both accomplished, the locking and unlocking of the door or the starting of the engine is permitted or executed.

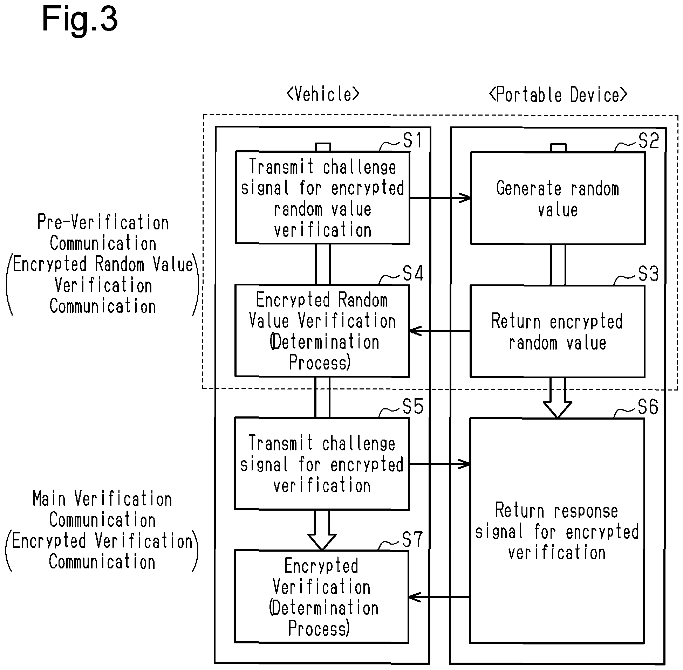

Fig. 3 is a schematic diagram illustrating the operational flow of bidirectional communication including the encrypted random value verification. A wake signal (not illustrated) from the vehicle 2 initiates bidirectional communication. When the portable device 3 receives the wake signal and returns an acknowledgement signal (not illustrated) to the vehicle 2, bidirectional communication is established between the vehicle 2 and the portable device 3.

In step S1, the verification ECU 21 of the vehicle 2 transmits a pre-verification communication (encrypted random value verification) challenge signal as a pre-verification request.

In step S2, the microcomputer 31 of the portable device 3 generates a random value in response to the pre-verification request.

In step S3, the microcomputer 31 of the portable device 3 encrypts the random value and returns a response signal to the vehicle 2.

In step S4, the verification ECU 21 of the vehicle 2 obtains the random value from the response signal received during the pre-verification communication and performs encrypted random value verification to determine whether the random value is valid as the random value for the pre-verification communication. When determining in step S4 that the random value is not valid, the verification ECU 21 of the vehicle 2 determines that pre-verification communication has not been accomplished and stops performing bidirectional communication with the portable device 3 without shifting to the main verification communication.

When determining in step S4 that the random value is valid, the verification ECU 21 of the vehicle 2 proceeds to step S5 and transmits a main verification (encrypted verification) communication challenge signal that is based on the random value obtained in the pre-verification communication. For example, the verification ECU 21 transmits a challenge signal including a challenge code to which the random value is added.

In step S6, the microcomputer 31 of the portable device 3 returns a main verification response signal to the vehicle 2. The response signal is generated from the challenge signal that is based on the random value.

In step S7, the verification ECU 21 of the vehicle 2 obtains a response code from the response signal transmitted from the portable device 3 and compares the response code with the response code generated by the verification ECU 21 to perform encrypted verification. When the two response codes match in step S7, the verification ECU 21 of the vehicle 2 permits or executes the locking or unlocking of the door or the starting of the engine. In the present embodiment, the microcomputer 31 of the portable device 3 is one example of a communication controlling means, and the verification ECU 21 of the vehicle 2 is one example of a verifying means.

The present embodiment has the advantages described below.
(1) During bidirectional communication between the vehicle 2 and the portable device 3, the pre-verification communication is performed prior to the main verification communication to improve security. In addition, the pre-verification communication uses the same communication format as the main verification communication. Thus, the main verification communication serves as a retry of the pre-verification communication. The pre-verification communication is performed using verification logic similar to that of the main verification communication in accordance with the same communication format. Thus, the pre-verification communication is performed without affecting the main verification communication. Generally, a given communication period that is provided for establishing verification communication (e.g., such as a main verification communication) often includes a retry period to allow a retry verification to be performed when verification is not accomplished. The pre-verification communication is performed, prior to the main verification communication, using such a given period allowing for a retry verification. Thus, the processing performance can be improved without lengthening the communication time more than necessary.
(2) The main verification communication is performed under the condition that the pre-verification has been accomplished. Thus, the main verification communication is performed only when necessary. Further, security is improved since communication is performed only when necessary.
(3) The encrypted random value verification and the encrypted verification are performed. Thus, verification is performed twice to improve security for encrypted verification.
(4) The pre-verification communication and the main verification communication are both performed without changing the encrypted verification logic used for the main verification communication (challenge response authentication). Thus, the pre-verification communication may easily be applied to a versatile verification system.

The above embodiment may be modified as described below. The above embodiment and the modified examples described below may be combined as long as there are no technical contradictions.

After the portable device 3 generates the random value, the portable device 3 may measure the received signal intensity of the radio waves from the vehicle 2. In this case, when there is no specific change in the received signal intensity that would indicate movement from, for example, outside the passenger compartment to inside the passenger compartment, the portable device 3 may be configured not to return a response signal when receiving a main verification communication challenge signal inside the passenger compartment.

If encrypted random value verification and encrypted verification are both accomplished when communication is performed outside the passenger compartment, at least one of encrypted random value verification and encrypted verification may be omitted when communication is performed inside the passenger compartment. In this case, for example, the engine may be smoothly started thereby improving the convenience. Further, security is increased by performing encrypted random value verification and encrypted verification outside the passenger compartment.

Communication control using Bluetooth (registered trademark) or the like may be performed in parallel to the series of bidirectional communication.

When there is more than one portable device 3, the vehicle 2 may separately control each portable device 3. For example, the vehicle 2 may execute selective reply control that enable communication with one of the portable devices 3 in the passenger compartment and disable communication with another one of the portable devices 3 in the passenger compartment.

The LF signal, which has a low frequency, and/or the RF signal, which has a high frequency, is not limited to radio waves of the above-described frequency bands. Radio waves of other frequency bands may be used in accordance with the required communication distance. Further, radio waves of the same frequency band may be used in both directions during bidirectional communication.

Application of the electronic key system 1 is not limited to vehicles. For example, the electronic key system 1 may be implemented as an electronic key system for buildings.

A portable device (3) that performs bidirectional communication with a communication peer (2) includes a communication controlling means (31) for performing main verification communication (S5-S7) and pre-verification communication (S1-S4) prior to the main verification communication (S5-S7). In the main verification communication (S5-S7), the communication controlling means (31) receives a main verification communication signal (S5) from the communication peer (2) and returns a main verification response signal (S6). The communication controlling means (31) performs the pre-verification communication (S1-S4) using a communication format that is the same as that of the main verification communication (S5-S7). In the pre-verification communication (S1-S4), the communication controlling means (31) receives a pre-verification communication signal (S1) and returns a pre-verification response signal (S3) incorporating a random value in a response code.

## Claims

1. A portable device (3) configured to perform bidirectional communication with a communication peer (2), the portable device (3) being **characterized by** comprising:
a communication controlling means (31) for performing main verification communication (S5-S7) and pre-verification communication (S1-S4) prior to the main verification communication (S5-S7), wherein:
in the main verification communication (S5-S7), the communication controlling means (31) is configured to receive a main verification communication signal (S5) from the communication peer (2) and return a main verification response signal (S6);
the communication controlling means (31) is configured to perform the pre-verification communication (S1-S4) using a communication format that is the same as that of the main verification communication (S5-S7); and
in the pre-verification communication (S1-S4), the communication controlling means (31) is further configured to receive a pre-verification communication signal (S1) and return a pre-verification response signal (S3) incorporating a random value in a response code.

2. The portable device (3) according to claim 1, wherein
in the main verification communication (S5-S7), the communication controlling means (31) is configured to return the main verification response signal (S6) in response to receiving, from the communication peer (2), the main verification communication signal (S5) that is based on the random value.

3. A verification system (1) including a portable device (3) and a communication peer (2) configured to communicate with the portable device (3), wherein the verification system (1) is configured to perform verification through bidirectional communication between the portable device (3) and the communication peer (2), the verification system (1) being **characterized in that**:
the portable device (3) includes a communication controlling means (31) for performing main verification communication (S5-S7) and pre-verification communication (S1-S4) prior to the main verification communication (S5-S7), wherein
in the main verification communication (S5-S7), the communication controlling means (31) is configured to receive a main verification communication signal (S5) from the communication peer (2) and return a main verification response signal (S6),
the communication controlling means (31) is configured to perform the pre-verification communication (S1-S4) using a communication format that is the same as that of the main verification communication (S5-S7), and
in the pre-verification communication (S1-S4), the communication controlling means (31) is further configured to receive a pre-verification communication signal (S1) and return a pre-verification response signal (S3) incorporating a random value in a response code; and
the communication peer (2) includes a verifying means (21) for determining (S4) whether the random value included in the pre-verification response signal (S3) is valid as the random value for the pre-verification communication (S1-S4).

4. The verification system (1) according to claim 3, wherein
the verifying means (21) is configured to transmit the main verification communication signal (S5) under a condition that the verifying means (21) has determined that the random value included in the pre-verification response signal (S3) is valid.

5. The verification system (1) according to claim 4, wherein
the verifying means (21) is configured to generate the main verification communication signal (S5) based on the random value when the verifying means (21) has determined that the random value included in the pre-verification response signal (S3) is valid.
